# EUROPEAN PATENT APPLICATION

(11) **EP 3 539 528 A1**
(43) Date of publication of application: **18.09.2019**
(21) Application number: 19163259.5
(22) Date of filing: 15.03.2019
(51) Int. Cl.: A61H 1/02, A61H 3/00

(54) **LEG BELT TO EFFECTIVELY SUPPORT THE LEG AND WEARABLE ASSISTIVE DEVICE HAVING THE SAME**

(30) Priority: 15.03.2018 KR 20180030464; 15.03.2018 KR 20180030466; 24.07.2018 KR 20180085789; 12.09.2018 US 201862730399 P; 12.09.2018 US 201862730400 P; 12.09.2018 US 201862730412 P; 12.09.2018 US 201862730420 P
(71) Applicant: LG Electronics Inc., Seoul 07336 (KR)
(72) Inventor: NAM, Bohyun, 08592 Seoul (KR); PARK, Kyu Tae, 08592 Seoul (KR); SON, Jung Kyu, 08592 Seoul (KR); YU, Seonil, 08592 Seoul (KR); LEE, Wonjun, 08592 Seoul (KR)
(74) Representative: Vossius & Partner Patentanwälte Rechtsanwälte mbB

(57) **Abstract**

A wearable assistive device may include a main frame, a leg assembly that extends downward from an end of the main frame, and a foot assembly that is installed at an end of the leg assembly. The leg assembly may include a leg frame having an upper end connected to the main frame and a lower end connected to the foot assembly and a leg belt that is mounted on the leg frame. The leg belt may include a belt that secures to a leg of the user, and a frame in which the belt is stored in a retractable and withdrawable manner while moving in a zigzag pattern inside the frame.

## Description

### BACKGROUND

### 1. Field

This application relates to assistive and/or rehabilitative technology.

### 2. Background

In assistive and/or rehabilitative technology a wearable assistive device such as a wearable robot or robotic exoskeleton may assist or augment a movement of a user by providing an assistive force at various joints. The assistive force may be generated from a driving apparatus such as a motor.

The wearable assistive device may have a multi-joint skeletal structure that may play a role in assisting a power or strength of the user, and may assist a user in walking, bending, or lifting. The driving apparatus, the multi-joint skeletal structure, and a multi-frame structure may help to efficiently transmit the assistive force.

Such a wearable assistive device may be worn on and secured to a waist, a leg, and/or a foot of the user. A detachment mechanism that secures the wearable assistive device to the user is an important factor that determines the efficiency and convenience of use.

A conventional wearable assistive device is disclosed in US Patent Application No. 2016-0331624 (wearable action-assistance device). The wearable action-assistance device will be described with reference to the above.

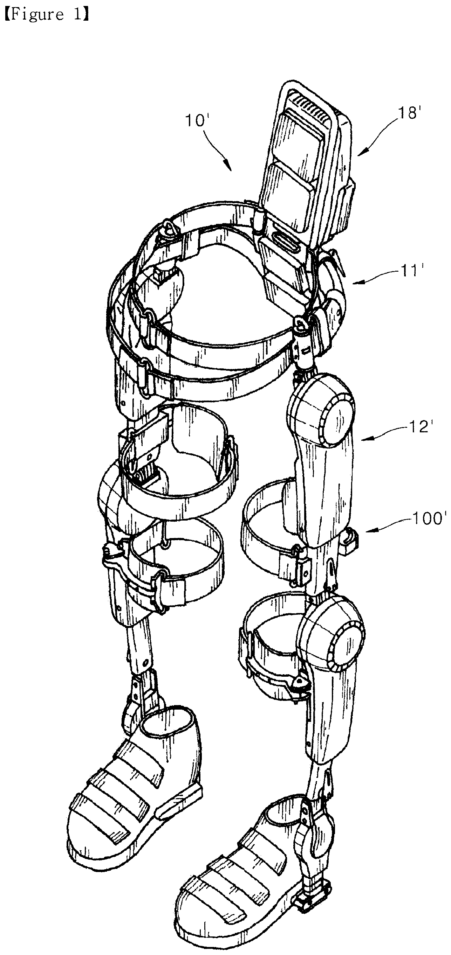

FIG. 1 is a configuration view of a wearable action-assistance device according to the related art. A wearable action-assistance device10' may include a waist frame 11', a lower frame or leg frame 12' and a control portion or back frame 18'. The leg frame 12' and the back frame 18' may be coupled to the waist frame 11'. A thigh cuff or thigh support 100' may be mounted on the leg frame 12'. The thigh support 100' may be coupled with a belt or strap 81' to secure the leg.

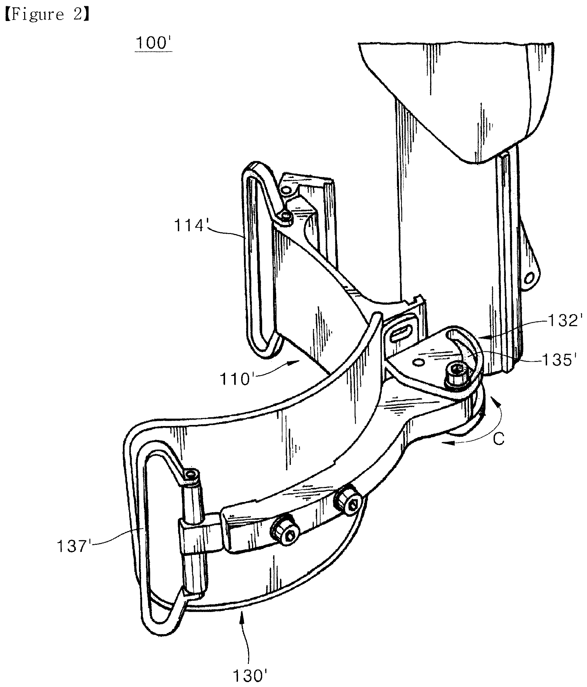

FIG. 2 is a configuration view of a thigh support in the wearable action-assistance device shown in FIG. 1. A thigh support 100' may include a fixing member or first support 110', a bracket member or bracket 132', and a cuff supporting member or a second support 130'. The bracket 132' may be coupled to the first support 110'. An arc type guide hole or guide slot 135' may be formed in the bracket 132'. The second support 130' may be coupled to the guide slot 135'. The second support 130' may be moved along the guide slot 135'. Accordingly, the second support 130' may be coupled to the first support 110' so that it is rotatable in a direction of an arrow (indicated by C) to adjust a width of a side of the thigh support 100'.

Connection portions or belt loops 114' and 137' may be formed in the first and second supports 110' and 130'. Ends of the belt (shown as 81' in FIG. 1) may be connected to the belt loops 114' and 137'. However, a thigh support 100' may not include a belt storage portion capable of storing the belt. The belt 81' may this be exposed even when the thigh support 100' is not used, which may increase the probability of contamination and damage of the belt 81'.

Since the belt 81' of the wearable action-assisting device may have to be stored separately, a user may be more likely to lose the belt 81'. Since the user may have to couple the belt 81' to the belt loops 137' and 114' each time to use the wearable action-assisting device 10', securing the belt 81' and using the wearable action-assisting device may become cumbersome and inefficient, making preparing to use the wearable action-assisting device 10' a slow process.

Conventional retractable belts are disclosed in KR Utility Model Registration No. 20-0470552 (storable safety belt for automobile) and US Patent Application No. 2016-0368450 (motor vehicle with a safety belt restraint system).

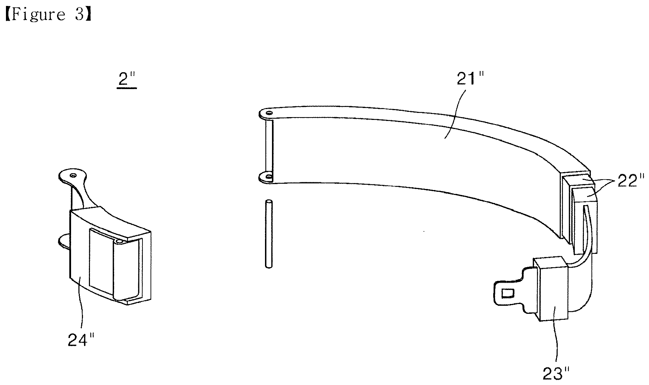

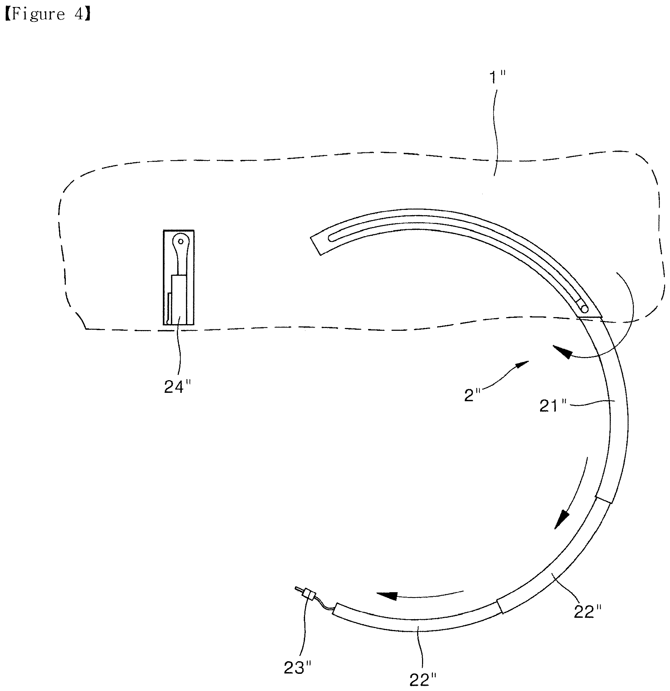

FIG. 3 is a schematic configuration view of a storable safety belt according to automobile art. FIG. 4 is a use state view of a storable safety belt shown in FIG. 3. A storable safety belt 2" may include a rotating block 21", a stretching block 22", a hook or buckle 23", and a buckle receiver 24". The stretching block 22" may be formed inside or inserted in the rotating block 21", and an elastic strap or belt may be coupled to the stretching block 22" so that a stretching and a contracting of the storable safety belt 2" may be possible. Also, the strap may be coupled with the hook 23".

The rotating block 21" may include a plurality of stretching blocks 22". When the user wears the storable safety belt 2", the rotating block 21" and the stretching block 22" may be withdrawn from a sheet or storage member 1. When the user is not wearing or using the storable safety belt 2", the storable safety belt 2" may be stored in the storage member 1. The rotating block 21" and the stretching block 22" may have a rectangular pipe form and not very bendable. Thus, the rotating block 21" and the stretching block 22" are not ideal for securing and supporting legs of a user, as the leg may not closely contact the storable safety belt 2".

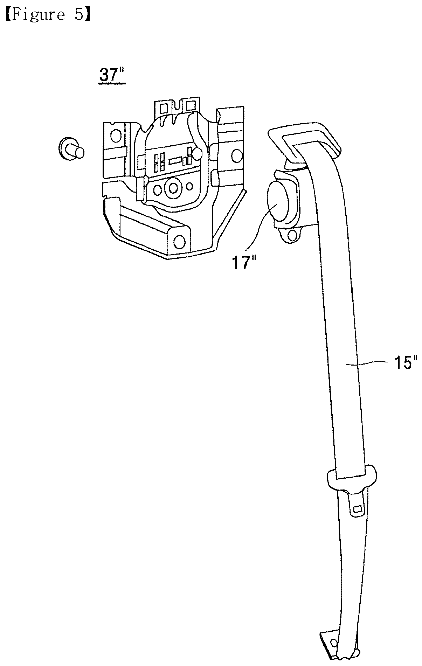

FIG. 5 is a configuration view schematically showing a safety belt restraint system according to automobile art. A safety belt restraint system 37" may include a safety belt 15" and a belt retractor 17". The belt retractor 17" may include a roller and a torsion spring. An end of the safety belt 15" may be wound around the roller. When the safety belt 15" is withdrawn and exposed to an outside of a storage member, the safety belt 15" may be wound on and rewound from the belt retractor 17".

However, as the safety belt 15" is stored to be wound on the roller, the volume of the roller and thus the safety belt system may increase. Further, as the safety belt 15" is stored to be wound on the roller, a frictional force of the safety belt 15" about the roller may be increased. Accordingly, when the user wishes to wear the safety belt 15", a lot of force may be required to withdraw the safety belt 15.

The above references are incorporated by reference herein where appropriate for appropriate teachings of additional or alternative details, features and/or technical background.

### BRIEF DESCRIPTION OF THE DRAWINGS

The embodiments will be described in detail with reference to the following drawings in which like reference numerals refer to like elements wherein:
FIG. 1 is a configuration view of a wearable action-assisting device according to related art;
FIG. 2 is a configuration view of a thigh support in the wearable action-assisting device shown in FIG. 1;
FIG. 3 is a schematic configuration view of a storable safety belt according to automobile art;
FIG. 4 is a use state view of a storable safety belt shown in FIG. 3;
FIG. 5 is a configuration view schematically showing a safety belt restraint system according to automobile art;
FIG. 6A is a perspective view of a wearable assistive device or exoskeleton in accordance with an embodiment, FIG 6B is a perspective view of a wearable assistive device according to the other embodiment;
FIG. 7 is a schematic side view of the wearable assistive device shown in FIG. 6A;
FIG. 8 is a conceptual view of a technical configuration of a leg belt in accordance with an embodiment;
FIG. 9 is a perspective view schematically showing a leg belt in accordance with an embodiment in the wearable assistive device shown in FIG. 8;
FIG. 10 is a configuration view schematically showing a state in which a buckle is unfastened in the leg belt shown in FIG. 9;
FIG. 11 is a schematic top view of the leg belt shown in FIG. 10;
FIG.12 is an exploded perspective view of a main frame, a first frame and a second frame in the leg belt shown in FIG. 10;
FIG. 13 is a configuration view schematically showing a state in which an inner main frame, an inner first frame and an inner second frame shown in FIG. 12 are coupled;
FIG. 14 is a configuration view schematically showing a belt storage structure in the leg belt shown in FIG. 10;
FIG. 15 is a configuration view schematically showing a state in which an outer main frame is removed in the leg belt shown in FIG. 10;
FIG. 16 is a schematic exploded perspective view of the belt storage structure shown in FIG .14;
FIG. 17 is a schematic first use state view of the belt storage structure shown in FIG. 15;
FIG. 18 is a schematic second use state view of the belt storage structure shown in FIG. 15;
FIG. 19 is a schematic use state view of the leg belt shown in FIG. 12;
FIG. 20 is a schematic cross-sectional view of the leg belt shown in FIG. 9;
FIG. 21 is a schematic exploded perspective view of the leg belt shown in FIG. 20;
FIG. 22 is a schematic first state view of the leg belt shown in FIG. 20; and
FIG. 23 is a schematic second state view of the leg belt shown in FIG. 20.

### DETAILED DESCRIPTION

In the present disclosure, 'an assistive force' means an external force provided to assist a strength or a power of a user. 'The assistive force' may be provided by an electric motor, hydraulic pump, or actuator (hydraulic, pneumatic, or electric). The assistive force may be a rotation force provided at joints of a wearable assistive device in order to assist a movement of the user at his joints. In the present disclosure, 'a bending' means being bent in a first direction and extended to be curved or folded in a second direction different from the first direction. In the present disclosure, 'a hinge coupling' means that a coupling body such as a hinge is rotatably coupled about an object to be coupled.

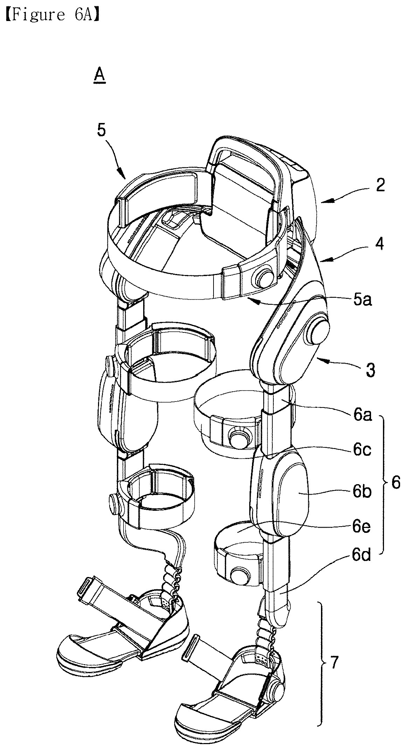

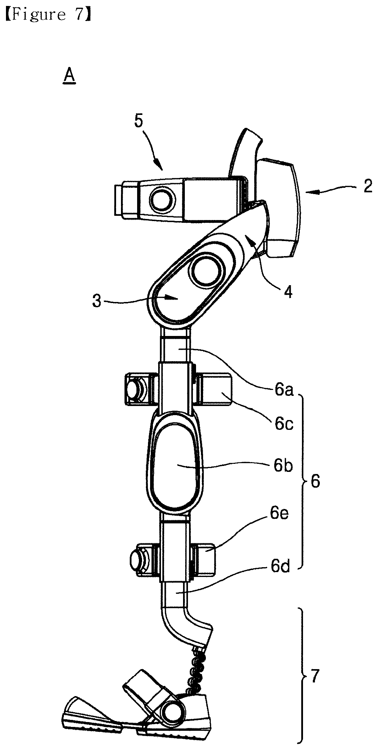

FIG. 6A is a perspective view of a wearable assistive device such as a wearable robot, e.g., exoskeleton, in accordance with an embodiment. FIG. 7 is a schematic side view of the exoskeleton FIG.6A.

When the user wears a wearable assistive device such as a wearable robot A, and more specifically an exoskeleton, on a lower body and walks, lifts, or bends, the wearable exoskeleton A may assist a lower body power or strength of a user. The exoskeleton A may include a lumbar/back frame 2, an actuated hip joint 3, a main frame 4, a subframe or waist/pelvic frame 5, a leg assembly or leg 6, and a foot assembly or foot support 7.

When the user wears the wearable exoskeleton A, the lumbar/back frame 2 may be provided at a rear or back, e.g., lumbar, of the user. The lumbar/back frame 2 may house a main controller to adjust a width of the main frame 4 to fit a waist or pelvis size of the user. The lumbar/back frame 2 may have a battery pack or power supply to power or charge the main controller 2. The lumbar/back frame 2 may be coupled to the subframe 5.

The subframe 5 may be worn on a waist of the user to support the waist. The subframe 5 may include a waist belt or belt assembly 5a to secure the subframe 5 to the waist, and the waist belt 5a may be adjustable in length in a via a button dial. A side of the subframe 5 in contact with the waist may be made of a shock-absorbent material, improving comfort.

The main frame 4 may be coupled to the lumbar/back frame 2. The main frame 4 may have a shape that covers a first side of a pelvis, e.g., ilium, of the user to a second side thereof. The main frame 4 may be formed in a substantially 'U'-shape.

A bent portion of the main frame 4 may be provided at a rear or back of the user. The lumbar/back frame 2 may be provided at the bent portion of the main frame 4. The main frame 4 may have a first end and a second end, which may be extended in a downward direction along the hips or ilium of the user.

The actuated hip joint 3 may be provided between the main frame 4 and the leg assembly. The actuated hip joint 3 may have a subcontroller to adjust a strength or magnitude of an assistive force that assists a power or strength of the user at the hip joint. The subcontroller or the main frame 4 may include a dial or knob so that the user can adjust the magnitude of the assistive force. The subcontroller or main frame 4 may be provided with an indicator to indicate the present magnitude of the assistive force, and may include or communicate with a lamp, light, or light-emitting device such as a light-emitting diode (LED). At the actuated hip joint 3, a driving means such as a motor or actuator (e.g., electric, hydraulic, or pneumatic) or a motor and gear set that provides or generates the assistive force may be provided. The leg assembly 6 may be coupled to a lower side of the actuated hip joint 3.

The leg assembly 6 may be made in pair to be worn on both legs of the user, respectively. Each leg assembly 6 may include an upper leg frame 6a, an actuated joint 6b, a lower leg frame 6d, and leg belts 6c and 6e.

The upper leg frame 6a may be connected to the main frame 4. The upper leg frame 6a may support and secure to a thigh of a user via the leg belt 6c. The lower leg frame 6d may support and secure to a calf of the user via the leg belt 6e. The leg belts 6c and 6e may include a belt or strap having a length adjustable via a button dial or knob.

A lower end of the upper leg frame 6a may be connected to the lower leg frame 6d via the actuated joint 6b, which may include a driving means such as a motor or actuator (e.g., electric, hydraulic, or pneumatic) or motor and gear set that generates an assistive force at the knee joint. For reference, the actuated joint 6b and actuated hip joint 3 may include various driving means or drives capable of generating the assisting force.

The upper leg frame 6a, the actuated joint 6b, and the lower leg frame 6d may extend along a side of the leg of the user so as not to interfere with a natural bending of the user's joints when he walks, lifts, or bends, improving convenience. The actuated joint 6b may move to correspond with a movement of the knee joint of the user. Similarly, the actuated hip joint 3 may move to correspond with a movement of the hip joint of the user. The upper leg frame 6a may extend forward or backward in a sagittal plane of motion from the actuated hip joint 3, and the lower leg frame 6d may extend forward or backward in the sagittal plane from the actuated joint 6b.

The upper leg frame 6a may be extended in a frontal plane of motion inward and outward, e.g., to right and left sides, by a predetermined angle by a hip joint structure (not shown) of the main frame 4. The upper leg frame 6a and the lower leg frame 6d may have a multi-joint structure capable of adjusting an inclination inward or outward to accommodate different sizes of the thigh and calf of the user, respectively. The upper and lower leg frames 6a and 6d may additionally have multi-frame structures to adjust lengths of the upper leg frame 6a and the lower leg frame 6d.

The foot support 7 may secure and support a foot or shoe of the user and may be coupled to a lower end of the lower leg frame 6d. The foot support 7 may secure a barefoot of the user, or the shoes or the socks of the user. For convenience of description, an example where the shoes of the user are secured by the foot support 7 will be described.

A length of a sole of the foot support 7 may be adjustable to accommodate various shoe sizes of the user. The foot support 7 may include a belt or strap to secure the shoes. The foot support 7 may be formed in a shape corresponding to the shoes of the user. The strap of the foot support 7 may include a buckle that may detach and fix the strap. The strap of the foot support 7 may have the same or similar structure to a structure of the leg belts 6c and 6e and the waist belt 5a of the present disclosure.

The foot support 7 may be optional, and the exoskeleton A may be an upper body exoskeleton, lower body exoskeleton, or an exoskeleton configured to be supported on an entire body of a user.

For example, exoskeleton A may instead be an upper body exoskeleton, which may have a lumbar/back support 2 housing a main controller, a main frame 4, a subframe 5, a limb assembly 6 extending upward from the main frame 4, and at least one actuated joint 3 or 6b. An exoskeleton A may also fit onto a complete or entire body of the user to accommodate both leg and arm limbs.

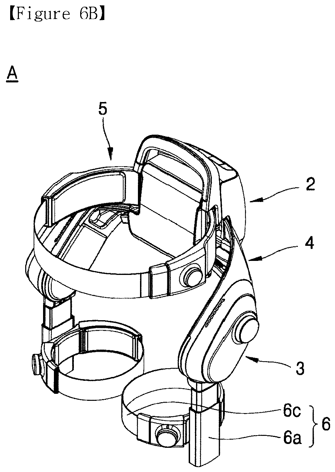

Furthermore, embodiments disclosed herein may not be limited to a complete lower body exoskeleton based on an intended use of the exoskeleton. For example, Referring to FIG. 6B the actuated joint 6b, the lower leg frame 6d, the leg belt 6e, and the foot support 7 may be omitted. Thus, an exoskeleton A may provide assistance to the user at the actuated hip joint 3, and may include a main frame 4, a lumbar/back frame 2, and a leg assembly 6 that includes only an upper leg frame 6a that secures to a thigh of the user via a leg belt 6c. Such an upper leg exoskeleton A may have a hip structure substantially the same as or similar variations to the hip structure of the main frame 4 described in detail herein.

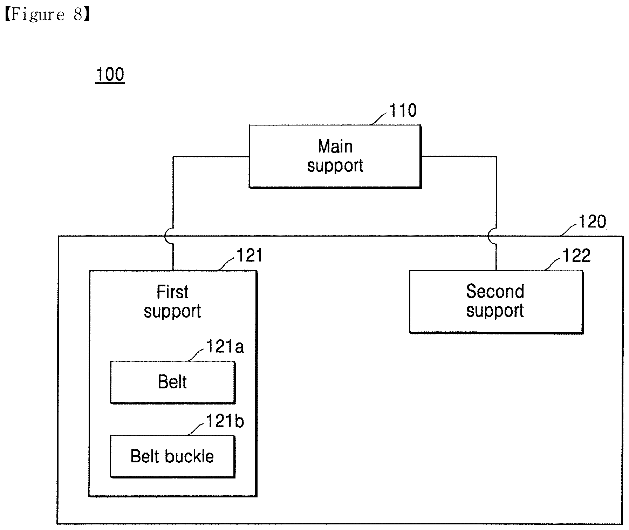

Hereinafter, a leg belt in accordance with an embodiment will be described in detail. FIG. 8 may be a conceptual view of a technical configuration of a leg belt in accordance with an embodiment.

A belt assembly 100 may be implemented as leg belts 6c or 6e in Figures 5-6. The leg belt 100 may also have a similar structure to a waist belt, and so may also be implemented as a belt of the subframe 5. For convenience of description, an example where the belt assembly 100 secures a thigh or calf of the user will be described herein, and the belt assembly 100 will be referred to as a leg belt. The leg belt 100 may include a main support 110 and a sub-support 120. The sub-support 120 may be formed in plurality. The sub-support 120 may include a first support 121 and a second support 122. A first side of the main support 110 may be rotatably coupled to the first support 121. A second side of the main support 110 may be rotatably coupled to the second support 122.

The first support 121 may include a belt or strap 121a and a belt fastener or buckle 121b. The belt 121a may wrap around a leg of a user. The belt 121a may be stored in the first support 121 so as to be withdrawable and/or retractable. The belt 121a may be connected to the belt buckle 121b. The belt buckle 121b may have a first end and a second end. The second end of the belt buckle 121b may be detachably coupled to the second support 122 while the first end of the belt buckle 121b may be connected to the belt 122a.

The first support 121 and the second support 122 may close to form an open area where the legs of the user may be positioned when the user secures the leg belt 100. When the belt 121a is not being used to secure the leg of the user to the leg belt 100, the belt 121a may be stored in the first support 121. Accordingly, contamination of and damage to the belt 121a may be prevented. The belt 121a may be withdrawn from the first support so that the belt buckle 121b may be detachably coupled to the second support 122.

The leg of the user may primarily be supported by the main support 110. The leg of the user may further be supported at first and second sides by the first support 121 and the second support 122. The first support 121 and the second support 122 may include a curved surface that covers the leg or waist of the user. Accordingly, the belt assembly 100 may have a structure to effectively support the leg or waist of the user. The first and second supports 121 and 122 may be coupled via hinge structures to be described later to the main support 110, which may further allow effective support and adjustment regardless of how wide the user's leg may be.

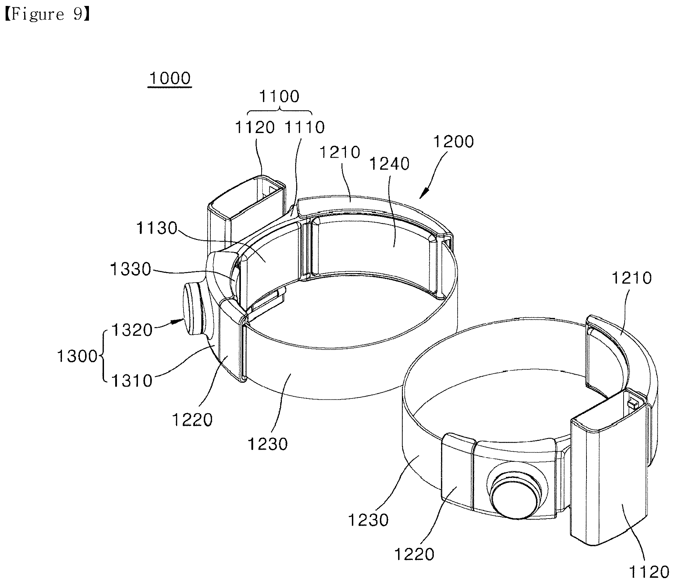

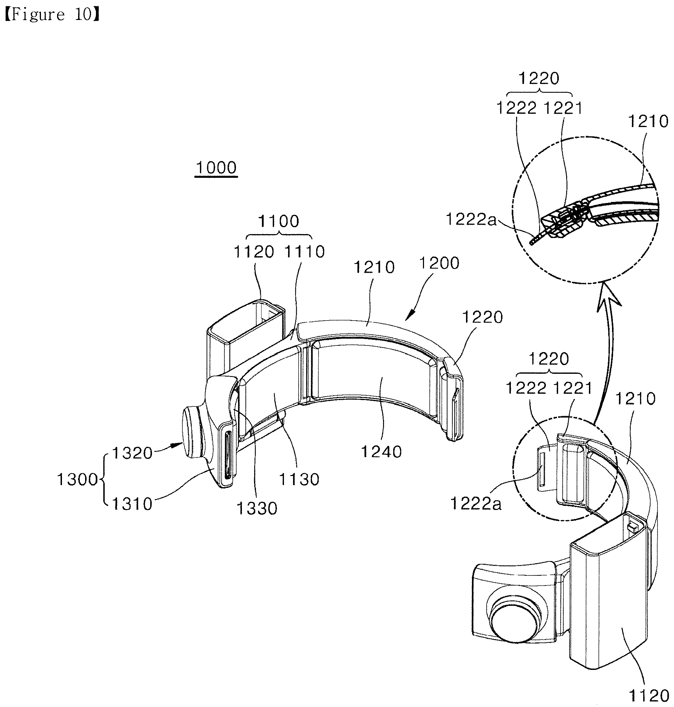

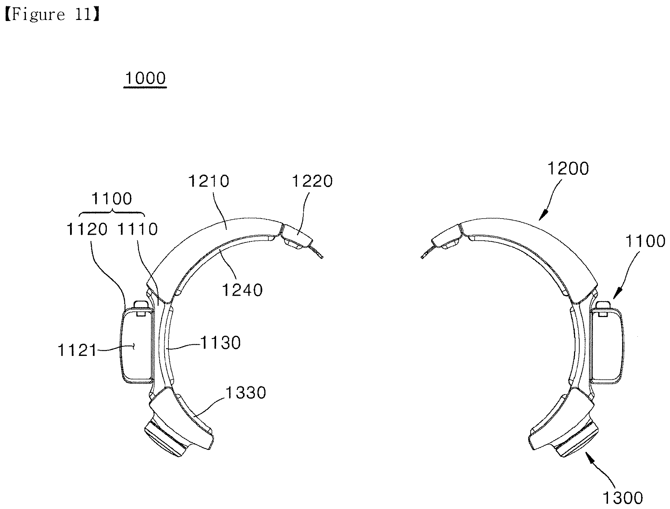

FIG. 9 is a perspective view schematically showing a leg belt in accordance with an embodiment represented in FIG. 8. FIG. 10 is a configuration view schematically showing a state in which a belt buckle may be unfastened in the leg belt shown in FIG. 9. FIG. 11 is a schematic top view of the leg belt shown in FIG. 9.

When the exoskeleton A has two leg assemblies each having multiple leg belts 1000, a leg belt 1000 may be realized as a pair of thigh supports that are mounted on an upper leg frame (shown as 6a in FIG. 6A), respectively. Further, the leg belt 1000 may be realized as a pair of calf supports that are mounted on a lower leg frame (shown as 6d in FIG. 6A), respectively. Further, the leg belts 1000 of each leg assembly 6 may have symmetric shapes so that the user can perform similar operations with both legs.

The leg belt 1000 may include a main support 1100, a first support 1200, and a second support 1300. The first support 1200 may be coupled to a first side of the main support 1100. The second support 1300 may be coupled to a second side of the main support 1100. The main support 1100 may be provided at a center between the first and second supports 1100 and 1200.

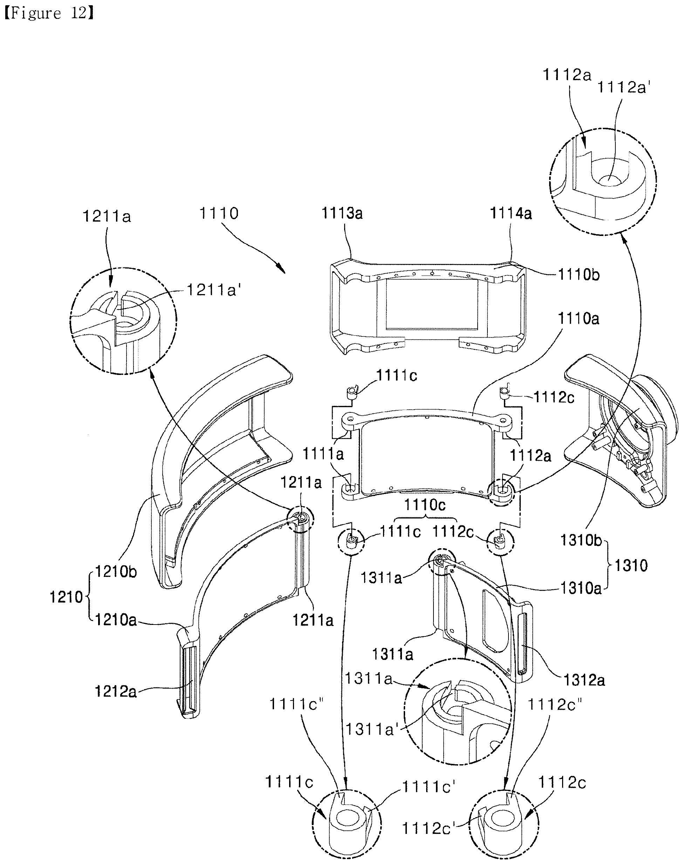

The main support 1100 may include a main frame 1110 and a leg coupling frame or leg connector 1120 that connects the leg belt 1000 to the leg assembly 6. The main frame 1110 may contact and support a leg of a user, and may be formed in a rectangular frame shape having a curved surface. A detailed shape of the main frame 1110 will be described in detail with reference to FIG. 12.

The leg of the user may be supported in an inner side of the main frame 1110, and the leg connector 1120 may be coupled to an outer side of the main frame 1110. The leg connector 1120 may couple the main frame 1110 to the upper or lower leg frame 6a or 6d and may be formed as a rectangular frame. A receiving hole or opening 1121 may be formed in the leg connector 1120. An upper or lower leg frame 6a or 6d may be inserted into the receiving hole 1121. That is, when the leg coupling frame 1120 couples to the main frame 1110, as the upper leg frame 6a so that the main frame 1110 may be mounted on the exoskeleton A.

The first support 1200 may include a first subframe or first frame 1210, a belt fastener or buckle 1220, and a belt or strap 1230. The first frame 1210 may be coupled to the main frame 1110 of the main support 1100 by a hinge joint or hinge. A detailed shape of the first frame 1210 will be described in more detail through FIG. 12.

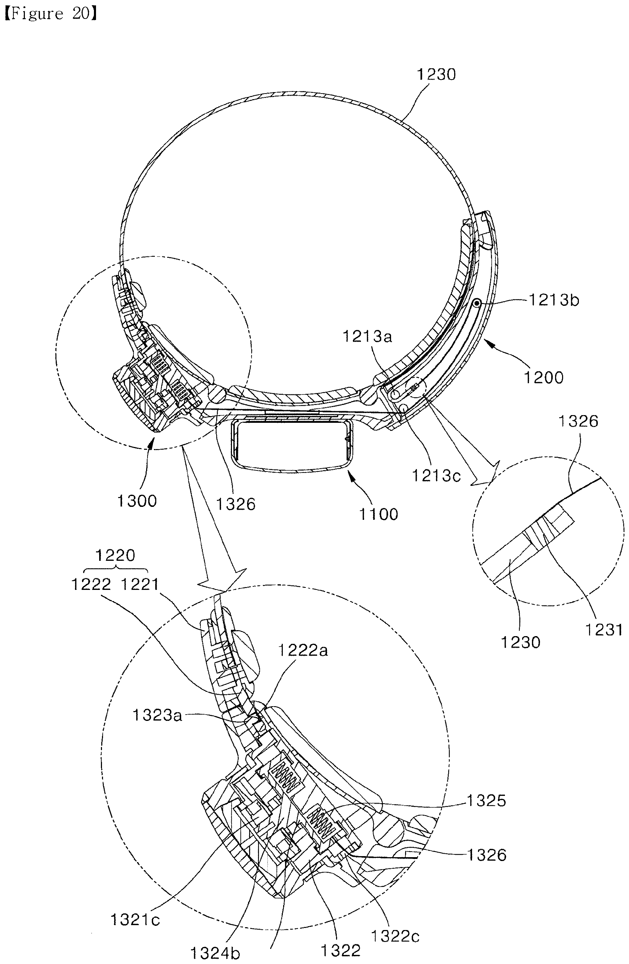

The belt buckle 1220 may include a buckle body or buckle base 1221 and a buckle plate or tongue 1222. In the buckle base 1221, the belt 1230 may be coupled to one side or a first side thereof and the belt plate 1222 may be coupled to the other side or a second side. The belt plate 1222 may be detachably coupled to the second support 1300. The belt plate 1222 may be formed with a slit 1222a into which a latch stick 1323a (FIG. 20) may be inserted.

A first side of the belt 1230 may be connected to the buckle base 1221 and a second side of the belt 1230 may be stored in the first frame 1210 so as to be retractable and withdrawable. Accordingly, the buckle base 1221 may rest on the first frame 1210 when the belt 1230 is stored. Further, the belt 1230 may be elastic or made of a material having an elasticity.

The second support 1300 may include a second frame 1310 and a wire winding structure or a wire winder 1320. A leg of the user may be provided at an inner side of the second frame 1310 when the leg belt 1000 is secured to the leg of the user, and a wire winder 1320 may be coupled to an outer side of the second frame 1310. In order to effectively support the leg of the user, the inner side of the second frame 1310 may have a curved surface. The second frame 1310 may be coupled to the main frame 1110 of the main support 1100 by a hinge joint. A detailed shape of the second frame 1310 for this purpose will be described in more detail through FIG. 12 to be described later.

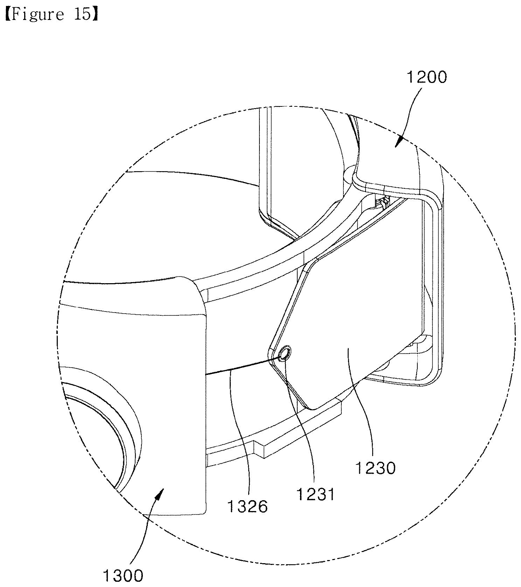

The wire winder 1320 may operate a fastening and unfastening of the belt buckle 1220 about the second frame 1310. Further, the wire winder 1320 may manipulate a winding of a wire 1326 (FIG. 15) connected to the belt 1230. The length of the belt 1230 may be adjusted by an operation of the wire winder 1320. As the wire 1326 is wound and unwound by the wire winder 1320, the belt 1230 may be moved in and out of the first support 1200. A detailed configuration of the wire winder 1320 and a belt length adjustment therethrough will be described later.

When the first frame 1210 and the second frame 1310 are coupled to the main frame 1110, the leg belt 1000 may be formed in a substantially "C"-shape. For this purpose, an inner surface of the first frame 1210 and the second frame 1310 may have curved surfaces that are symmetrical to each other.

Cushions or impact portions 1130, 1240, and 1330 may be coupled to the main support 1100, the first support 1200, and the second support 1300, respectively. The cushions 1130, 1240, and 1330 may provide a soft texture and a resilience to the user, and may be variously realized by a soft foam or a cushion sheet, for example. The cushions 1130, 1240, and 1330 may be made of a shock-absorbent material or may be made of a soft material to provide comfort to the user. The cushions 1130, 1240, and 1330 may fasten to the main, first, and second supports 1100, 1200, and 1300 via Velcro to facilitate cleaning and detachment.

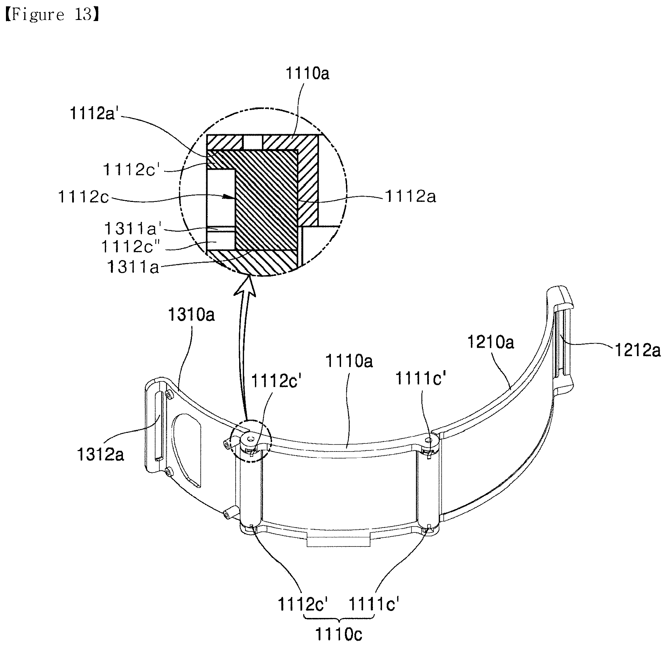

FIG. 12 is an exploded perspective view of the main frame 1110, the first frame 1210, and the second frame 1310 in the leg belt 1000 shown in FIG. 10. FIG. 13 is a configuration view schematically showing a state in which an inner main frame, an inner first frame, and an inner second frame shown in FIG. 12 may be coupled.

The main frame 1110 may include an inner main frame 1110a, an outer main frame 1110b, and an elastic member 1110c. The leg of the user may contact an inner side of the inner main frame 1110a, and the outer main frame 1110b may be coupled to an outer side of the inner main frame 1110a. In consideration of a shape of the leg, the inner main frame 1110a may have a rectangular frame shape having a curved surface.

A first hinge hole or bracket 1111a may be formed at a first end of the inner main frame 1110a. A second hinge hole or bracket 1112a may be formed at a second end of the inner main frame 1110a. The first frame 1210 may be coupled to the first hinge bracket 1111a to form a hinge joint. The second frame 1310 may be coupled to the second hinge bracket 1112a to form a hinge joint. The first hinge bracket 1111a may be formed on upper and lower ends or surfaces of the inner main frame 1110a, respectively. The second hinge bracket 1112a may be formed on upper and lower ends or surfaces of a second end of the inner main frame 1110a, respectively.

In one embodiment of a hinge coupling structure, the first hinge bracket 1111a and the second hinge bracket 1112a may be formed with a groove. In the first frame 1210 and the second frame 1310, a projection or shaft corresponding to the groove may be formed, respectively. The first frame 1210 and the second frame 1310 may be coupled to the main frame 1110 by a hinge joint, respectively, by inserting the projection into the groove.

As another embodiment of the hinge coupling structure, a through hole may be formed in the first and second hinge brackets 1111a and 1112a. A hole corresponding to a through hole may be formed in the first and second frames 1210 and 1310. The first frame 1210 and the second frame 1310 can be coupled to the main frame 1110 by inserting a fixing pin or hinge pin into the through hole and the hole.

The elastic member 1110c may elastically support the first frame 1210 and the second frame 1310 to the main frame 1110, respectively. The elastic member 1110c may include a first elastic member 1111 c to support the first frame 1210 and a second elastic member 1112c to support the second frame 1310.

The first and second elastic members 1111c and 1112c may have a cylindrical shape with two protrusions. A first or bottom pin 1111c' may be formed at a first or bottom end of the first elastic member 1111c, and a second or top pin 1111c" may be formed at a second or bottom end of the first elastic member 1111c. Similarly, a first or bottom pin 1112c' may be formed at a first or bottom end of the second elastic member 1112c, and a second or top pin 1112c" may be formed at a second or bottom end of the second elastic member 1112c.

A first insertion groove 1111a' may be formed in the first hinge bracket 1111a. The first elastic member 1111c may be housed in the first insertion groove 1111a'. When the first elastic member 1111c is inserted into the first insertion groove 1111a', the first pin 1111c' of the first elastic member 111c may be contact a side wall of the first insertion groove 1111a'.

A second insertion groove 1112a' may be formed in the second hinge bracket 1112a. The second elastic member 1112c may be housed in the second insertion groove 1112a'. When the second elastic member 1112c is inserted into the second insertion groove 1112a', the first pin 1112c' of the second elastic member 1112c may contact on a side wall of the second insertion groove 1112a'.

The outer main frame 1110b may be shaped to correspond to that of the inner main frame 1110a so as to cover an outer side of the inner main frame 1110a. The outer main frame 1110b may be coupled to the outer side of the inner main frame 1110a.

The first frame 1210 may include an inner first frame 1210a and an outer first frame 1210b. The leg of the user may contact an inner side of the inner first frame 1210a, and the outer first frame 1210b may be coupled to an outer side of the inner first frame 1210a. In consideration of a shape of the leg, the inner first frame 1210a may have a rectangular frame shape having a curved surface.

A first main hinge shaft or knuckle 1211a corresponding to the first hinge bracket 1111a may be formed at a first end of the inner first frame 1210a.

The first main hinge knuckle 1211a may be formed with a first coupling groove 1211a' to which the first pin 1111 c' of the first elastic member 1111 c may be coupled. The first elastic member 1111c may be inserted into the first insertion groove 1111a' of the first hinge bracket 1111a, and the first pin 1111c' may contact a side wall of the first insertion groove 1111a'. The second pin 1111 c" of the first elastic member 1111c may be supported on the first coupling groove 1211a'.

Accordingly, the first frame 1210 may be in an elastically supported state on the main frame 1110 by the first elastic member 1111 c, and the first main hinge knuckle 1211a, the first elastic member 1111c, and the first hinge bracket 1111a may together form a hinge joint. When the first frame 1210 is coupled to the main frame 1110 by the hinge joint and rotated, the first pin 1111c' of the first elastic member 1111c may be supported on the side wall of the first insertion groove 1111a', and the second pin 1111c" may be supported on the first coupling groove 1211a'. The first elastic member 1111c may be compressed or expanded.

Further, a belt hole or slot 1212a in which the belt 1230 may be retracted and withdrawn may be formed in the inner first frame 1210a. The belt hole 1212a may also be referred to as a withdrawal hole or slot. The outer first frame 1210b may have a shape corresponding to that of the inner first frame 1210a so that the outer first frame 1210b may cover and couple to an outer side of the inner first frame 1210a.

Similar to a structure of the first frame 1210, the second frame 1310 may include an inner second frame 1310a and an outer second frame 1310b. The leg of the user may contact an inner side of the inner second frame 1310a, and the outer second frame 1310b may be coupled to an outer side of the inner second frame 1310a. In consideration of a shape of the leg, the inner second frame 1310a may have a rectangular frame shape having a curved surface.

A second main hinge shaft or knuckle 1311a corresponding to the second hinge bracket 1112a may be formed at a first end of the inner second frame 1310a. The second main hinge knuckle 1311a may be formed with a second coupling groove 1311a' to which the second pin 1112c" of the second elastic member 1112c may be coupled. The second elastic member 1112c may be inserted into the second insertion groove 1112a' of the second hinge bracket 1112a, and the first pin 1112c' may be supported on the second insertion groove 1112a'. The second pin 1112c" of the second elastic member 1112c may be supported on the second coupling groove 1311a'.

Accordingly, the second frame 1310 may be in an elastically supported state on the main frame 1110 by the second elastic member 1112c. The second hinge bracket 1112a, the second main hinge knuckle 1311a, and the second elastic member 1112c may together form a hinge joint. When the second frame 1310 is coupled to the main frame 1110 by a hinge joint and rotated, the first pin 1112c' of the second elastic member 1112c may be supported on a side wall of the second insertion groove 1112a', and the second pin 1112c" may be supported on the second coupling groove 1311a'. The second elastic member 1112c may be compressed or expanded.

Further, a buckle hole or slot 1312a may be formed in the inner second frame 1310a. The buckle hole 1312a may also be referred to as an insertion hole or slot. The buckle plate 1222 may be inserted into the insertion hole 1312a. The outer second frame 1310b may be formed in a shape corresponding to that of the inner second frame 1310a so that the outer second frame 1310b covers and couples to an outside of the inner second frame 1310a. Further, a wire winder 1320 may be mounted on the outer second frame 1310b.

Accordingly, the second frame 1310 may be coupled to the second side of the main frame 1110 by a hinge joint while being elastically supported by the second elastic member 1112c. As another embodiment of an elastic supporting structure, an elastic member may be formed in a plate shape. A first end of the elastic member may be coupled to the main frame 1110, and a second end of the elastic member may be coupled to a subframe or first and second frames 1200, 1300. Accordingly, the subframe can be elastically supported on the main frame by the elastic member.

A first stopper 1113a may be formed on the first side of the outer main frame 1110b to limit a movement of the first frame 1210. A second stopper 1114a may be formed on the second side of the outer main frame 1110b to limit a movement of the second frame 1310. The first stopper 1113a may be provided in a rotation area or range of the first frame 1210. The second stopper 1114a may be provided in a rotation area or range of the second frame 1310.

A rotation area means an area or range in which the first frame 1210 and the second frame 1310 move, rotate, or pivot while they are coupled to the outer main frame 1110b, respectively. The first stopper 1113a may be projected outward at an end of the first side of the outer main frame 1110b. The first stopper 1113a may oppose the first hinge bracket 1111a on the outer main frame 1110b; i.e., the first stopper 1113a may project from an outer side of the outer main frame 1110b, while the first hinge bracket 1111a of the inner main frame 1110a may be positioned at an inner side of the outer main frame 1110b.

An upper end of the first stopper 1113a may be higher than where an upper end of the outer first frame 1210b is coupled to the outer main frame 1110b. The first stopper 1113a may also be positioned outward from a pivot point of the first hinge joint and where the outer first frame 1210b is coupled to the outer main frame 1110b. Accordingly, after the first frame 1210 is rotated at a predetermined angle about the main frame 1110, the first frame 1210 may be in contact with the first stopper 1113a and further rotation may be prevented.

Further, at a second end of the second side of the outer main frame 1110b, the second stopper 1114a may be formed to be projected outward. The second stopper 1114a may oppose the second hinge bracket 1112a; i.e., the second stopper 1114a may project from an outer side of the outer main frame 1110b, while the second hinge bracket 1112a of the inner main frame 1110a may be positioned at an inner side of the outer main frame 1110b.

An upper end of the second stopper 1114a may be higher than where an upper end of the outer second frame 1310b is coupled to the outer main frame 1110b. The second stopper 1114a may also be positioned outward from a pivot point of the second hinge joint and where the outer first frame 1210b is coupled to the outer main frame 1110b. Accordingly, after the second frame 1310 is rotated at a predetermined angle about the main frame 1110, the second frame 1310 may contact the second stopper 1114a and further rotation may be prevented.

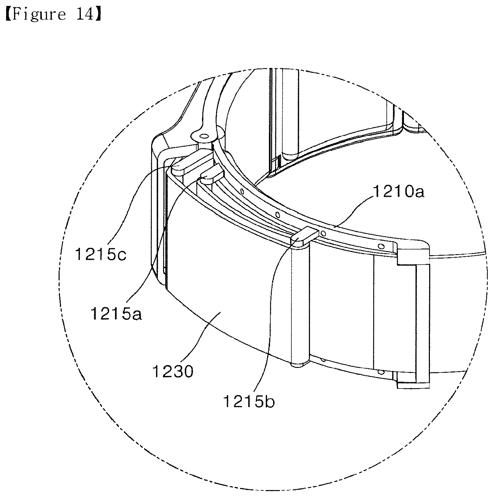

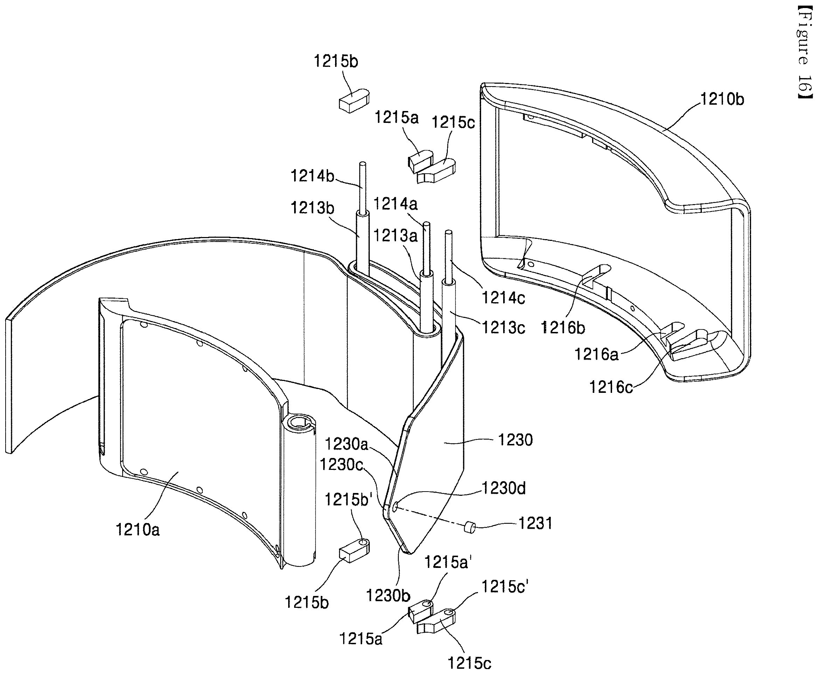

FIG. 14 is a configuration view schematically showing a belt storage structure in the leg belt shown in FIG. 10. FIG. 15 is a configuration view schematically showing a state in which an outer main frame may be removed in the leg belt shown in FIG. 10. FIG. 16 is a schematic exploded perspective view of the belt storage structure shown in FIG. 14.

To cover a leg of a user, the belt 1230 may be formed to extend in a longitudinal direction, and may have a predetermined width. The belt 1230 may be stored inbetween the inner and outer first frames 1210a and 1210b so as to be retractable and withdrawable. A first end of the belt 1230 may be connected to the belt buckle 1220 (FIG. 9), and the other end or a second end of the belt 1230 may be connected to a wire 1326.

An inclined surface or edge may be formed at the second end of the belt 1230 in which the width is gradually narrowed. The width of the belt 1230, which may be measured in a vertical or up and down direction of the belt 1230 when worn by the user, may be constant for most of a length of the belt 1230, but may be gradually diminished at the second end of the belt. Referring to FIG. 16, the inclined edge may include a first inclined surface or side 1230a, a second inclined surface or side 1230b, and a connecting corner or side 1230c. A wire hole 1230d may be formed on the inclined edge. The inclined edge of the belt may minimize an initial frictional force with a supporting structure that is in contact with the belt 1230 when the belt 1230 is moved, making a movement of the belt 1230 more convenient.

The first inclined side 1230a may be inclined downward from a first side of the second end of the belt 1230. The second inclined side 1230b may be inclined upward from a second side of the second end of the belt 1230. The first inclined side 1230a and the second inclined side 1230b may or may not be symmetrical to each other. The connecting edge 1230c may connect the first inclined surface 1230a and the second inclined surface 1230b. Accordingly, the second end of the belt 1230 may be formed in a substantially "<" shape or V-shape. The wire hole 1230d may be adjacent to the connecting edge 1230c. Alternatively, the inclined surface of the belt 1230 may not include the connecting corner 1230c, and the first inclined surface 1230a and the second inclined surface 1230b may instead be directly connected to form a point.

Further, the belt 1230 may include a wire connector 1231 that is inserted into and coupled to the wire hole 1230d. As the wire 1326 is coupled to the wire connector 1231 and the wire connector 1231 is inserted into the wire hole 1230d, the wire 1326 may be connected to the belt 1230. The wire connector 1231 may be formed in a ring shape. Alternatively, the belt 1230 may not include the wire connector 1231, and the wire 1326 may be directly connected, e.g., tied, to the wire connecting hole 1230d.

The inner and outer first frames 1210a and 1210b may include belt supporting rollers or rollers 1213a, 1213b and 1213c, belt roller shafts or shafts 1214a, 1214b and 1214c, and belt roller fixing members or roller holders 1215a, 1215b and 1215c. The roller holders 1215a, 1215b, and 1215c may also be referred to as roller fixers. The rollers 1213a, 1213b, and 1213c may support the belt 1230. The rollers 1213a, 1213b, and 1213c may have a cylindrical hollow shape or tube shape. The rollers 1213a, 1213b, and 1213c may be mounted on the inner and outer first frames 1210a and 1210b at both ends in order to support the width of the belt. A longitudinal direction of the rollers may correspond or a lateral or width direction of the belt 1230

The rollers 1213a, 1213b, and 1213c may be in contact with the belt 1230 while guiding a movement of the belt 1230. Accordingly, the rollers 1213a, 1213b, and 1213c may be rotated in accordance with a movement of the belt 1230, and may reduce friction so that the belt 1230 may easily change directions. As an example, FIGS. 14 and 16 show that the inner and outer first frames 1210a and 1210b may include three rollers. However, embodiments disclosed herein are not limited to exactly three rollers 1213a, 1213b, and 1213c. The rollers 1213a, 1213b and 1213c may include a first roller 1213a, a second roller 1213b, and a third roller 1213c. The first roller 1213a, the second roller 1213b, and the third roller 1213c may be sequentially arranged in the first frame 1210. The first roller 1213a may be provided at a front or inner side of a first side of the first frame 1210, the second roller 1213b may be provided at a second side of the first frame 1210, and the third roller 1213c may be provided at a rear or outer side of the first side of the first frame 1210. Accordingly, the first roller 1213a, the second roller 1213b, and the third roller 1213c may be arranged so that a movement of the belt 1230 may follow a zigzag line in the first frame 1210. In other words, in order to reduce the amount of space required in a longitudinal direction, any number of rollers may be used such that the belt is wrapped in a zigzag or accordion overlap inside the space between the inner first frame 1210a and the outer first frame 1210b.

The shafts 1214a, 1214b, and 1214c may support the rollers 1213a, 1213b, and 1213c so as to be rotatable. The shafts 1214a, 1214b, and 1214c may be inserted into hollow holes of the rollers 1213a, 1213b, and 1213c. An outer diameter of the shafts 1214a, 1214b and 1214c may be smaller than an inner diameter of the rollers 1213a, 1213b, and 1213c. The number of shafts 1214a, 1214b, and 1214c may correspond to the number of rollers 1213a, 1213b, and 1213c. The shafts 1214a, 1214b and 1214c may include a first shaft 1214a, a second shaft 1214b, and a third shaft 1214c. The first shaft 1214a may be inserted into the first roller 1213a. The second shaft 1214b may be inserted into the second roller 1213b. The third shaft 1214c may be inserted into the third roller 1213c. Further, the first shaft 1214a, the second shaft 1214b and the third shaft 1214c may be arranged sequentially at both sides of the first frame 1210 in the same manner as the rollers 1213a, 1213b and 1213c. The first shaft 1214a may be provided at the front of the first side of the first frame 1210, the second shaft 1214b may be provided at the second side of the first frame 1210, and the third shaft 1214c may be provided at the rear of the first side of the first frame 1210. Rather than using shafts, pins may be used to support the rollers at the top and bottom.

The roller holders 1215a, 1215b and 1215c may fix the shafts 1214a, 1214b and 1214c to the first frame 1210. The number of rollers 1215a, 1215b, and 1215c may correspond to the number of shafts 1214a, 1214b, and 1214c. The roller holders 1215a, 1215b and 1215c may include the first roller holder 1215a, the second roller holder 1215b and the third roller holder 1215c. The first roller holder 1215a may fix the first shaft 1214a to the first frame 1210. The second roller holder 1215b may fix the second shaft 1214b to the first frame 1210. The third roller holder 1215c may fix the third shaft 1214c to the first frame 1210.

Further, the first roller holder 1215a, the second roller holder 1215b, and the third roller holder 1215c may be sequentially arranged at both sides of the first frame 1210. The first roller holder 1215a may be provided at the front of the first side of the first frame 1210, and the second roller holder 1215b may be provided at the second side of the first frame 1210, and the third roller holder 1215c may be provided at the rear of the first side of the first frame 1210.

The roller holders 1215a, 1215b, and 1215c may be made in pair to support both ends of the shafts 1214a, 1214b, and 1214c. The roller holders 1215a, 1215b and 1215c may be formed with roller shaft insertion grooves 1215a', 1215b' and 1215c' into which the shafts 1214a, 1214b and 1214c may be inserted and pressed/friction fitted.

The roller shaft insertion grooves 1215a', 1215b', and 1215c' may have a shape corresponding to ends of the shafts 1214a, 1214b, and 1214c. The ends of the shafts 1214a, 1214b and 1214c may be inserted into the roller shaft insertion grooves 1215a', 1215b' and 1215c'. The roller holders 1215a, 1215b and 1215c may be coupled to the inner first frame 1210a or the outer first frame 1210b. FIG. 16 shows an embodiment in which the roller holders 1215a, 1215b and 1215c may be coupled to the outer first frame 1210b. The outer first frame 1210b may thus be formed with coupling grooves 1216a, 1216b, and 1216c. The coupling grooves 1216a, 1216b, and 1216c may correspond to the roller holders 1215a, 1215b, and 1215c.

As the roller holders 1215a, 1215b and 1215c are formed in pair, the coupling grooves 1216a, 1216b and 1216c may also be formed at upper and lower surfaces of the outer first frame 1210b, respectively. The coupling grooves 1216a, 1216b, and 1216c may be formed on inner sides of the upper and lower surfaces so that they face each other. The roller holders 1215a, 1215b and 1215c may be coupled in the coupling grooves 1216a, 1216b and 1216c. The coupling grooves 1216a, 1216b and 1216c may include first coupling groove 1216a, second coupling groove 1216b, and third coupling groove 1216c. The first coupling groove 1216a may correspond to the first roller holder 1215a, the second coupling groove 1216b may correspond to the second roller holder 1215b, and the third roller holder 1215c may correspond to the third coupling groove 1216c.

The first coupling groove 1216a may be formed on the front of the first side of the outer first frame 1210b, the second coupling groove 1216b may be formed on the second side of the outer first frame 1210b, and the third coupling groove 1216c may be provided on the rear of the first side of the outer first frame 1210b. The belt 1230 may be sequentially supported on the first roller 1213a, the second roller 1213b, and the third roller 1213c. While a movement of the belt 1230 may follow a zigzag pattern by the first roller 1213a, the second roller 1213b, and the third roller 1213c, the belt 1230 may be stored in the first frame 1210. An entire length of the belt 1230 can be stored in a predetermined space. Further, rather than using the coupling grooves 1216a, 1216b, and 1216c, roller holders 1215a, 1215b and 1215c, roller shaft insertion grooves 1215a', 1215b', and 1215c', and shafts 1214a, 1214b and 1214c, pins may be integrally formed at top and bottom (i.e., upper and lower) surfaces of the outer first frame 1210b to support the rollers 1213a, 1213b, and 1213c.

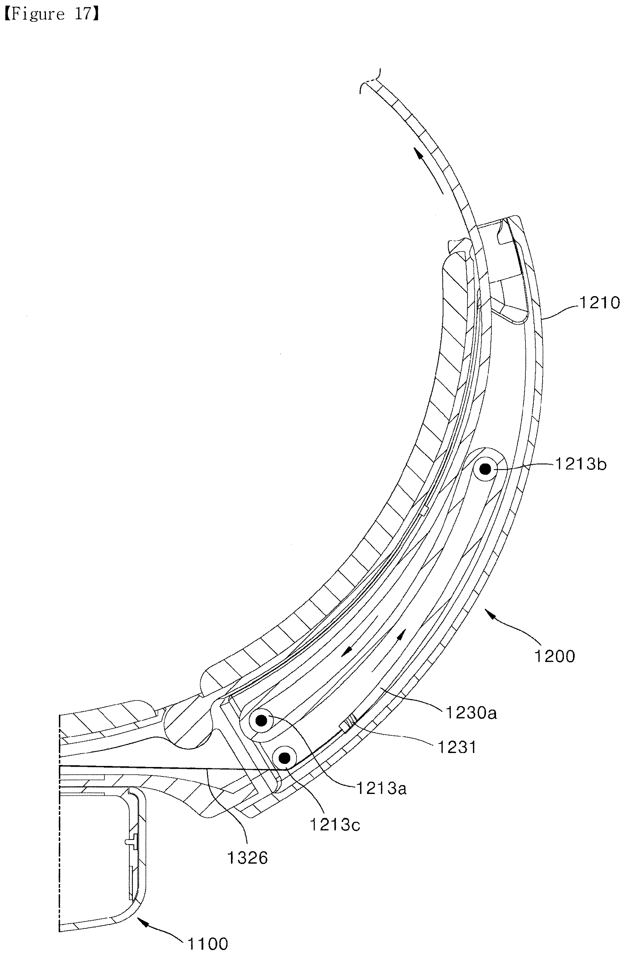

FIG. 17 is a schematic first state view of the belt storage structure shown in FIG. 15. The belt 1230 may be stored in the first frame 1210 so as to be retractable and withdrawable. A first end of the belt 1230 may be connected to a belt buckle (shown as 1220 in FIG. 11), and a second end of the belt 1230 may be connected to a wire 1326.

The belt 1230 may be stored in the first subframe 1210 so that the belt 1230 is sequentially supported on a first roller 1213a, a second roller 1213b, and a third roller 1213c.

When the belt 1230 is withdrawn from the first subframe 1210, the belt 1230 is moved in an inside of the first subframe 1210. In an order of the third roller 1213c, the second roller 1213b, and the first roller 1213a, the second end of the belt 1230 connected to the wire 1326 may be moved. Therefore, the belt 1230 may be quickly moved without interfering with an internal structure of the first frame 1210.

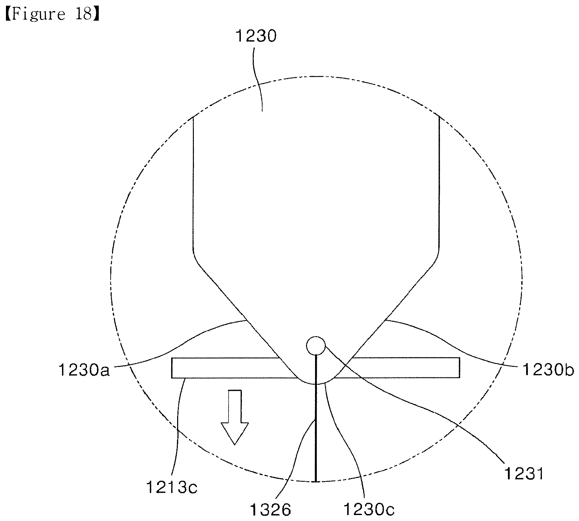

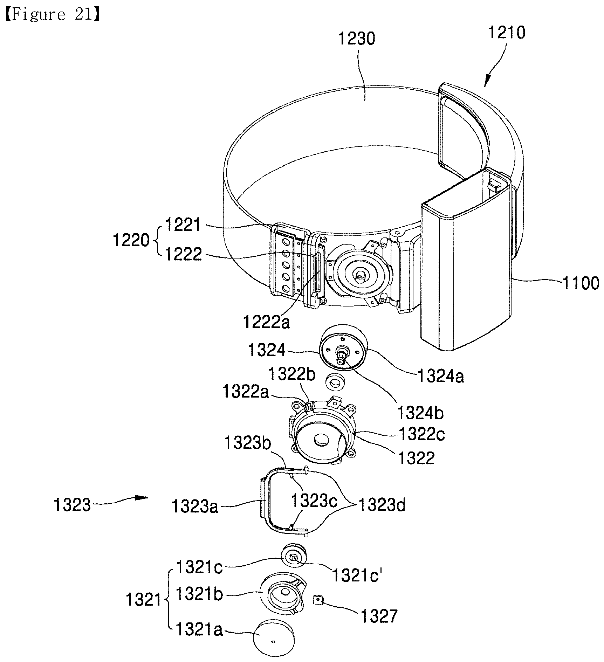

FIG. 18 is a schematic second state view of the belt storage structure shown in FIG. 15. More specifically, FIG. 18 shows a third roller 1213c, a belt 1230, and a wire 1326. When the wire 1326 is wound on a wire winder (shown as 1320 in FIG. 21), the belt 1230 may be pulled by the wire 1326 and the belt 1230 may be moved into an inside of a first subframe 1210. The second end of the belt 1230 connected to the wire 1326 may be pulled inside of the first frame 1210 while passing by a roller of the first, second and the rollers 1213a, 1213b, and 213c . FIG. 18 shows an embodiment in which the belt 1230 passes by and contacts the third roller 1213c. The second end of the belt 1230 may be formed of a first inclined edge 1230a, a second inclined edge 1230b, and a connecting edge 1230c. The second end of the belt 1230 may therefore be formed in a substantially "<" shape. When the second end of the belt 1230 passes by the third roller 1213c, the connecting edge 1230c, having the smallest area, and the inclined edges 1230a, 1230b, which are wider, may be in contact with the third roller 1213c in that sequence line, the connecting edge 1230c first follow by one first and second inclined edges 1230a and 1230b. Accordingly, an initial frictional force of the belt 1230 about the third roller 1213c may be reduced.

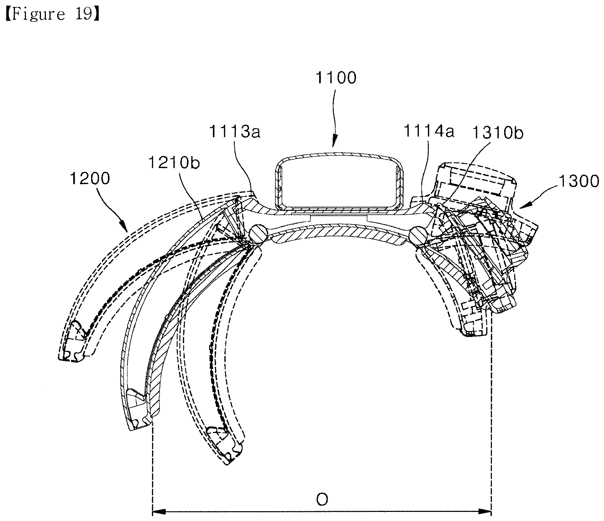

FIG. 19 is a schematic use state view of the leg belt shown in FIG. 12. As previously described, on both sides of a main support 1100, a first support 1200 and a second support 1300 may be coupled by a hinge joint so as to be rotatable. Further, the first support 1200 and the second support 1300 may be elastically supported by an elastic member.

Accordingly, the first support 1200 and the second support 1300 may be rotated to be inside or outside of an open area O. When the first support 1200 is rotated to be outside of the open area O by a predetermined angle or more, an outer first frame 1210b may be in contact with a first stopper 1113a so that further rotation beyond the predetermined angle is limited. When the second support 1300 is rotated to be outside of the open area O by a predetermined angle or more, an outer second frame 1310b may be in contact with a second stopper 1114a, and further rotation beyond the predetermined angle may be limited. A rotation range of the first support 1200 and the second support 1300 may be set according to a position of the first stopper 1113a and the second stopper 1114a.

FIG. 20 is a schematic cross-sectional view of the leg belt shown in FIG. 9. FIG. 21 is a schematic exploded perspective view of the leg belt shown in FIG. 20. A belt 1230 may be received in a first frame 1210 of a first support 1200 and may be retractable and withdrawable. A first end of the belt 1230 may be coupled to a belt buckle 1220 and a second end of the belt 1230 may be coupled to a wire 1326. The belt buckle 1220 may include a buckle base 1221 and a buckle plate or tongue 1222. The belt 1230 may be coupled to a first end of the buckle base 1221 and the buckle plate 1222 may be coupled to a second end of the buckle base 1221. The buckle plate 1222 may be formed with a slit or latch ring 1222a.

A second support 1300 may include a second frame 1310 and a wire winder 1320. The wire winder 1320 may be provided in the second frame 1310. The wire winder 1320 may include a button dial 1321, a wire winding body or case 1322, a latch hook 1323, a wire winding dispenser 1324, a plate spring 1325, the wire 1326, and a latch fixer 1327. The wire winding dispenser 1324 may be one of a reel, bobbin, and spindle. For convenience, the wire winding dispenser 1324 will be referred to as a wire reel 1324, and the case 1322 will be referred to as a reel case 1322.

The button dial 1321 may be rotatably coupled to the reel case 1322. The button dial 1321 may be coupled to the reel case 1322 so as to be rotatable to wind the wire 1326. The button dial 1321 may include a button 1321a, a dial body 1321b, and a wire operator or inner side 1321c.

The button 1321a and the inner disc 1321c may be coupled to the dial body 1321b. A projection hole 1321c' may be formed in the inner disc 1321c. The latch hook 1323, which may fix to the buckle plate 1222, may be coupled to the reel case 1322. As the reel case 1322 is linearly moved, the button dial 1321 can move the latch hook 1323 in an outward and inward direction or in a linear direction corresponding to a direction in which the button dial 1311 is moved.

The latch hook 1323 may include a latch stick 1323a, a latch body 1323b, an inner latch projection 1323c, and an outer latch projection 1323d. The latch stick 1323a may be inserted into the slit 1222a of the buckle plate 1222 to limit a movement of the buckle plate 1222. The latch stick 1323a may be projected in an outward direction from a vertical section of the latch body 1323b. The inner latch projection 1323c may be formed on the latch body 1323b so as to be projected to an inside of a C-shape or [-shape the latch body 1323b. The outer latch coupling projection 1323d may be formed on the latch body 1323b so as to be projected from an end of the latch body 1323b or to an outside of a C-shape or [-shape of the latch body 1323b. The slit 1222a may be a hole or an opening having a length in the longitudinal direction of the buckle plate 1222, or other appropriate shape based on the structure for latching or securing the buckle plate 1222.

The latch hook 1323, the button dial 1321, and the winding 1324 may be coupled to the reel case 1322. A latch groove or guide 1322a, a latch support 1322b, and a wire hole 1322c may be formed on the reel case 1322. The inner latch projection 1323c of the latch hook 1323 may be set on the latch groove 1322a. A movement of the latch projection 1323c may be limited by the latch support 1322b. The latch projection 1323d may be coupled to the reel case 1322 by the latch fixer 1327.

The wire reel 1324 may be provided in the reel case 1322. A hole 1324a into which the wire 1326 may be inserted may be formed or an inner circumferential surface or the wire reel 1324. At a center of the wire reel 1324, a projection 1324b may be formed. The projection 1324b may selectively connect the wire reel 1324 and the button dial 1321 in accordance with a movement of the button dial 1321 via the projection hole 1321c'. The wire 1326 may penetrate the wire hole 1322c to an inside of the reel case 1322, and connect to the wire reel 1324 inside the reel case 1322.

The projection 1324b may be selectively coupled to the projection hole 1321c' of the inner disc 1321c. When the projection hole 1321c' is coupled to the projection 1324b, the wire reel 1324 may be rotated by a rotation of the button dial 1321. When the projection hole 1321c' is taken off the projection 1324b, the wire reel 1324 may able to rotate independent from a movement of the button dial 1321.

A plate spring 1325, which may be an elastic member, may be inserted into and coupled to the wire reel 1324. The wire 1326 may be connected to the plate spring 1325. With a movement of the wire 1326, the plate spring 1325 may be compressed or restored. When the plate spring 1325 is restored after compression, the plate spring 1325 may rotate the wire reel 1324. Further, the wire 1326 may be fixed to the belt 1230 by a wire connector 1231.

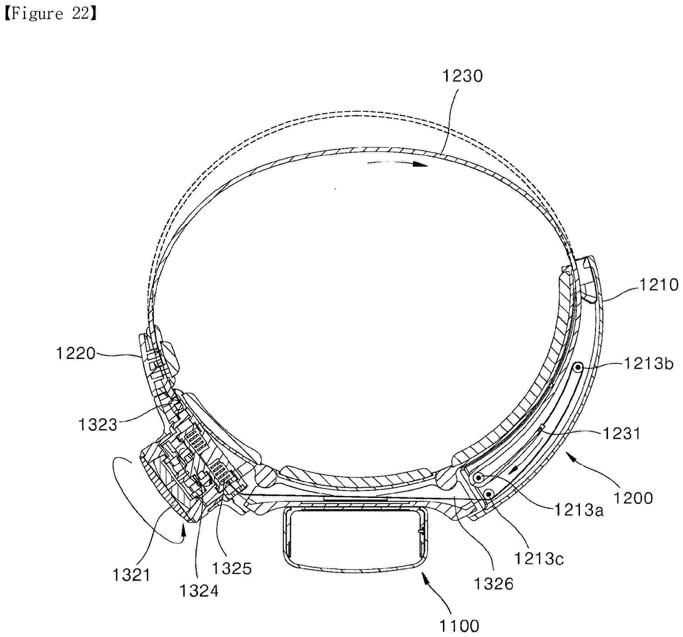

FIG. 22 is a schematic first state view of the leg belt shown in FIG. 20. The belt 1230 may be withdrawn from the first frame 1210. The wire 1326 may be withdrawn from the wire reel 1324, and the plate spring 1325 may become compressed. and The belt buckle 1220 may then be fastened to the second frame 1310. i.e., the latch stick 1323a of the wire winder 1320 may be inserted into the slit 1222a of the buckle plate 1222.

The button dial 1321 may be coupled to the projection 1324b of the wire reel 1324. When a user rotates the button dial 1321 to tighten the length of the belt 1230, a movement of the wire reel 1324 may be interlocked with a rotation of the button dial 1321, and the wire 1326 may be wound on the wire reel 1324.

As the wire 1326 may be moved in a direction of the arrow in FIG. 22, the belt 1230 connected to the wire 1326 may be moved into the first frame 1210. Accordingly, an exposed length of the belt 1230 may be reduced, and a user can tighten the belt 1230 to fit his or her legs.

The belt 1230 may be moved through the rollers 1213a, 1213b, and 1213c. Further, when sitting, muscles in the leg may be shaped and sized differently than when standing. Since the leg belt 1000 can adjust the length of the belt 1230 after the belt buckle 1220 is fastened, the user can sit down, put on the exoskeleton A, and adjust the leg belt after standing up.

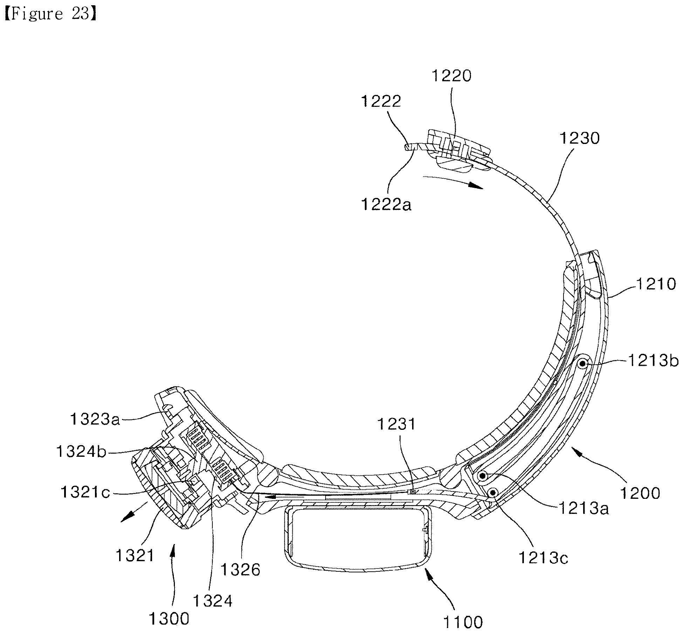

FIG. 23 is a schematic second state view of the leg belt shown in FIG. 20. The button dial 1321 may be pulled in an outward direction of the second frame 1310 to release and untighten the belt buckle 1220. The latch stick 1323a may be taken out of the slit 1222a of the buckle plate 1222 as the button dial 1321 is pulled outward. When the button dial 1321 is moved, projection operation hole 1321c' of the inner disc 1321c may be uncoupled from the projection 1324b of the wire reel 1324.

The wire reel 1324 may be rotated by a restoring force of the plate spring 1325. The wire 1326 may be wound on the wire reel 1324 as the wire reel 1324 rotates. As shown by an arrow, the belt 1230 may be moved to be stored in an inside of the first frame 1210 to be stored. As the belt 1230 is automatically wound by a simple operation of the button dial 1321, the user can quickly and simply unfasten the leg belt 1000. Further, when the leg belt 1000 is not used, the belt 1230 may be stored in the first frame 1210. The belt 1230 may be supported on the rollers 1213a, 1213b, and 1213c, and may be retracted in the first frame 1210 in a zigzag line. Accordingly, a large length of the belt 1230 may be stored in a small space, and a frictional force may be minimized due to inclined edges of the belt 1230. A movement of the belt may be convenient, preventing contamination and damage.

It is to be understood that the above-described embodiment is illustrative and not restrictive in all respects, and the scope of this application will be indicated by the claims to be described later, rather than by the above-mentioned detailed description. The meaning and the range of claims to be described later and all such modifications and changeable forms derived from the equivalent concept are included in the scope of this disclosure.

Embodiments disclosed herein may provide a wearable assistive device such in as a wearable robot, i.e., exoskeleton, capable of storing a belt or strap to secure a leg of a user. Embodiments disclosed herein may prevent contamination and breakage of the belt by providing a structure where the belt is stored in the wearable assistive device when the belt is not being used to secure a leg of the user to the wearable assistive device.

The wearable assistive device may secure a length of a leg belt that can be stored in a predetermined space so that a moving direction or line of motion of the belt may have a zigzag line pattern. The wearable assistive device may have a structure such that a user can quickly secure his or her leg to the wearable assistive device via a belt. The wearable assistive device may quicken a time it takes for the belt to retract and withdraw from a storage portion or storage location by including a structure where the belt is stored to be moveable linearly. The belt may move as a wire connected to the belt is wound and unwound. The wearable assistive device may have a belt storage structure that allows a convenient movement of the belt. The belt can be moved without a disruption in the belt storage structure by using a structure or rollers to guide a movement of the belt.

Embodiments disclosed herein are not limited to the above-mentioned objects, and the other objects and the advantages of this disclosure, which are not mentioned, can be understood by the following description, and more clearly understood by the disclosed embodiments. It will be also readily seen that the objects and the advantages of this disclosure may be realized by means indicated in the patent claims and a combination thereof.

A wearable assistive device, i.e., exoskeleton, may include a frame that stores a belt or leg belt that is retractable and withdrawable. Embodiments disclosed herein may include a belt storage structure that stores the belt in a frame when the leg of the user is not secured to the wearable assistive device. The belt may be withdrawn from the frame to secure the leg of the user. The belt may be withdrawn to an outside of the belt storage structure only when the leg of the user is secured so that contamination and breakage of the belt may be prevented.

The wearable assistive device may include a wire connected to one end of the belt and a wire winding structure or wire winder that winds the wire. Embodiments disclosed herein may wind and unwind the wire to move the belt. As a result, a moving force or a force required to move the belt may be minimized.

The wearable assistive device may include a plurality of belt supporting rollers or rollers. Embodiments disclosed herein may store a belt so that a moving direction or movement of the belt follows a zigzag line pattern by the roller. As a result, the belt can be stored in a pre-determined storage space such that a maximum length of the belt can be stored.

The wearable assistive device may include a plurality of rollers, a belt roller shaft or roller shaft, and a belt roller fixing member or a roller fixer or holder. The belt is stored so that the, movement or motion of the belt may be switched in a zigzag line by the rollers. As a result, the belt may be conveniently moved in an inside of the belt storage structure.

The wire may be connected to the belt, and an end of the belt connected to the wire may be formed with an inclined surface. As a result, when the belt is moved through the rollers in an inside of the storage structure, a resistance or friction may be minimized through the inclined surface of the belt.

When the belt is not being used, it may be provided in the storage structure to prevent contamination and the breakage of the belt. Accordingly, a lifetime of the belt may be minimized, and the user can use the wearable assistive device that is maintained in a clean state.

The wearable assistive device may move the belt through a winding of a wire connected to the belt. Accordingly, the user may move the belt with a small force by moving the belt through the winding of the wire, and without winding the belt which may having a larger frictional force than the wire. The user may manually withdraw the belt by a buckle, or may use a dial or knob to wind the wire connected to the belt to move the belt buckle in the storage structure and tighten the belt.

In the wearable assistive device, since the belt may be stored so that the moving direction is switched in a zigzag line, it is possible to store the belt that can be stored in the pre-determined storage space. Accordingly, it may be possible to minimize the volume of the wearable assistive device and the degree of design freedom may be increased.

The belt may be stored so that the moving direction thereof is switched in a zigzag line, and as a withdrawing direction of the belt is the same as a moving direction, the belt may be linearly moved to shorten a movement time of the belt. Accordingly, the user can quickly secure his or leg to the wearable assistive device.

The belt may be stored in and moved to a storage space by a guide structure. Accordingly, the belt can be conveniently moved in the inside of the storage space without being tangled or being limited to an inner structure of the storage space. An inclined surface may be formed at an end of the belt. A resistance may be minimized at the time of a guide movement by the inclined surface, and the user can move the belt with a small force.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present disclosure.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the present disclosure are described herein with reference to cross-section illustrations that are schematic illustrations of idealized embodiments (and intermediate structures) of the present disclosure. As such, variations from the shapes of the illustrations as a result, for example, of manufacturing techniques and/or tolerances, are to be expected. Thus, embodiments of the present disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the present disclosure. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the present disclosure, the drawings and the appended claims. In addition to variations and modifications in the component parts and/or arrangements, alternative uses will also be apparent to those skilled in the art.

## Claims

1. A wearable assistive device, comprising:
a main frame (4) configured to support a waist; and
a leg assembly (6) that extends from an end of the main frame (4), the leg assembly (6) having a leg frame (6a, 6d) connected to the main frame (4), and a leg belt (6c, 6e, 100, 1000) that is mounted on the leg frame (6a, 6d), wherein the leg belt (6c, 6e, 100, 1000) includes:
a belt (121a, 1230) that secures a leg, and
a storage frame (1210) where the belt (121a, 1230) has a zigzag line of motion within the storage frame (1210) while being retracted and withdrawn from the storage frame (1210).

2. The wearable assistive device of claim 1, wherein the leg belt (6c, 6e, 100, 1000) comprises a main support (110, 1100) and a sub-support (120) coupled to the main support (110, 1100) via a hinge, and wherein the sub-support (120) comprises the belt (121a, 1230) and the storage frame (1210).

3. The wearable assistive device of claim 1 or 2, wherein the storage frame (1210) further comprises a roller (1213a, 1213b, 1213c), a shaft (1214a, 1214b, 1214c) that is inserted into the roller (1213a, 1213b, 1213c) to support the roller (1213a, 1213b, 1213c), and a fixture (1215a, 1215b, 1215c) which fixes ends of the shaft (1214a, 1214b, 1214c) to the storage frame (1210) and preferably
wherein the roller (1213a, 1213b, 1213c) comprises a first roller (1213a), a second roller (1213b), and a third roller (1213c); the shaft (1214a, 1214b, 1214c) comprises a first shaft (1214a) that is inserted into the first roller (1213a), a second shaft (1214b) that is inserted into the second roller (1213b), and a third shaft (1214c) that is inserted into the third roller (1213c); the fixture (1215a, 1215b, 1215c) comprises a first fixture (1215a) that fixes the first shaft (1214a) to the storage frame (1210), a second fixture (1215b) that fixes the second shaft (1214b) to the storage frame (1210), and a third fixture (1215c) that fixes the third shaft (1214c) to the storage frame (1210);
and wherein the first roller (1213a), the first shaft (1214a), and the first fixture (1215a) are provided at a front of a first side of the storage frame (1210); the second roller (1213b), the second shaft (1214b), and the second fixture (1215b) are provided at a second side of the storage frame (1210); and the third roller (1213c), the third shaft (1214c), and the third fixture (1215c) are provided at a rear of the first side of the storage frame (1210).

4. The wearable assistive device of claim 1 or 2, wherein a plurality of rollers (1213a, 1213b, 1213c) are provided, and wherein the rollers (1213a, 1213b, 1213c) are sequentially and repeatedly arranged so that a first roller (1213a) is provided at a first side of the storage frame (1210) and a second roller (1213b) is provided at the second side of the storage frame (1210),
wherein a plurality of shafts (1214a, 1214b, 1214c) are provided, and wherein the shafts (1214a, 1214b, 1214c) are sequentially and repeatedly arranged so that a first shaft (1214a) is provided at the first side of the storage frame (1210) and a second shaft (1214b) is provided on the second side of the storage frame (1210), and
wherein a plurality of fixtures (1215a, 1215b, 1215c) are provided, and the fixtures (1215a, 1215b, 1215c) are sequentially and repeatedly arranged so that a first fixture (1215a) is provided at the first side of the storage frame (1210) and a second fixture (1215b) is provided at the second side of the storage frame (1210).

5. The wearable assistive device of claim 3 or 4, wherein the storage frame (1210) includes a first coupling groove (1216a) in which the first fixture (1215a) is inserted, a second coupling groove (1216b) in which the second fixture (1215b) is inserted, and a third coupling groove (1216c) in which the third fixture (1215c) is inserted; and wherein the first coupling groove (1216a) is provided at the front of the first side of the storage frame (1210), the second coupling groove (1216b) is provided at the second side of the storage frame (1210), and the third coupling groove (1216c) is provided at the rear of the first side of the storage frame (1210).

6. The wearable assistive device of any one of claims 1 to 5, further including an inclined surface formed at a first end of the belt (121a, 1230), wherein the inclined surface comprises a first inclined edge (1230a) that is inclined downward from a first side of the first end of the belt (121a, 1230), a second inclined edge (1230b) that is inclined upward from a second side of the first end of the belt (121a, 1230), and a connecting edge (1230c) to connect the first inclined edge (1230a) and the second inclined edge (1230b), wherein preferably the inclined surface has a V-shape, wherein preferably the first end of the belt (121a, 1230) is coupled with a wire (1326) that moves the belt (121a, 1230) to an inside of the storage frame (1210).

7. The wearable assistive device of any one of claims 2 to 6, wherein the sub-support (120) comprises a first support (121, 1200) that is coupled to a first side of the main support (110, 1100) by a first hinge joint, and a second support (122, 1300) that is coupled to a second side of the main support (110, 1100) by a second hinge joint; and wherein the first support (121, 1200) comprises the belt (121a, 1230), the storage frame (1210), and a belt buckle (121b, 1220) that is provided on a first end of the belt (121a, 1230), and the second support (122, 1300) comprises a wire (1326) connected to a second end of the belt (121a, 1230) and a wire winder (1320) that winds the wire (1326).

8. A wearable assistive device, comprising:
a main frame (4) configured to be worn on a waist; and
a leg assembly (6) that longitudinally extends from the main frame (4), the leg assembly (6) having a leg belt (6c, 6e, 100, 1000), wherein the leg belt (6c, 6e, 100, 1000) includes:
a strap (121a, 1230) that secures a leg of the user, and
a storage frame (1210) in which the strap (121a, 1230) is stored in a retractable and withdrawable manner, and a first end of the strap (121a, 1230) is formed in a V-shape.

9. The wearable assistive device of claim 8, wherein the V-shape is formed of a first inclined edge (1230a) that is inclined downward from a first side of the first end of the strap (121a, 1230), a second inclined edge (1230b) that is inclined upward from a second side of the first end of the strap (121a, 1230), and a connecting edge (1230c) that connects the first inclined edge (1230a) and the second inclined edge (1230b), wherein preferably the V-shape forms an overall inclined surface on the first end of the strap (121a, 1230), and wherein a second end of the strap (121a, 1230) protrudes from the storage frame (1210) when the strap (121a, 1230) is withdrawn from the storage frame (1210).

10. The wearable assistive device of claim 8 or 9, wherein the leg belt (6c, 6e, 100, 1000) further comprises:
a buckle (121b, 1220) that is coupled to the second end of the strap (121a, 1230),
a wire (1326) that is connected to the first end of the strap (121a, 1230) and is stored and wound in the storage frame (1210) in order to move the strap (121a, 1230) to an inside of the storage frame (1210), and
a wire winder (1320) that winds the wire (1326), the buckle (121b, 1220) being detachably coupled to the wire winder (1320).

11. A belt assembly (6c, 6e, 100, 1000) of a wearable assistive device, comprising:
a main support (110, 1100) that is formed with a first hinge bracket (1111a); and
a sub-support (120) having a belt (121a, 1230) and a subframe (1210) in which the belt (121a, 1230) is stored such that the belt (121a, 1230) may be retracted and withdrawn along a zigzag line of motion.

12. The belt assembly (6c, 6e, 100, 1000) of the wearable assistive device of claim 11, wherein the sub-support (120) is formed with a first hinge knuckle (1211a) that is rotatably coupled to the first hinge bracket (1111a), and the subframe (1210) comprises a roller (1213a, 1213b, 1213c) and a shaft (1214a, 1214b, 1214c) that is inserted into the roller (1213a, 1213b, 1213c).

13. The belt assembly (6c, 6e, 100, 1000) of the wearable assistive device of claim 11 or 12, wherein a plurality of rollers (1213a, 1213b, 1213c) are provided such that a first roller (1213a) in the plurality of rollers (1213a, 1213b, 1213c) is provided at a first side of the subframe (1210) and a second roller (1213b) in the plurality of rollers (1213a, 1213b, 1213c) is provided at a second side of the subframe (1210), and wherein a plurality of shafts (1214a, 1214b, 1214c) are provided such that a first shaft (1214a) in the plurality of shafts (1214a, 1214b, 1214c) is provided at the first side of the subframe (1210) and a second shaft (1214b) in the plurality of shafts (1214a, 1214b, 1214c) is provided at the second side of the subframe (1210).

14. The belt assembly (6c, 6e, 100, 1000) of the wearable assistive device of any one of claims 11 to 13, wherein an inclined surface is formed at the first end of the belt (121a, 1230), the inclined surface including a first inclined surface (1230a) that is inclined downward from a first side of the first end of the belt (121a, 1230), a second inclined surface (1230b) that is inclined upward from a second side of the first end of the belt (121a, 1230), and a connecting corner (1230c) that connects the first inclined surface (1230a) and the second inclined surface (1230b), wherein preferably the inclined surface has a V-shape.

15. The belt assembly (6c, 6e, 100, 1000) of the wearable assistive device of any one of claims 11 to 14, wherein the sub-support (120) further comprises:
a buckle (121b, 1220) provided on a second end of the belt (121a, 1230),
a wire (1326) connected to the first end of the belt (121a, 1230) and stored in the subframe (1210) in a winding manner to move the belt (121a, 1230) to an inside of the subframe (1210), and
a wire winder (1320) that winds the wire (1326) and to which the buckle (121b, 1220) is detachably coupled.
